Europäisches Patentamt

European Patent Office

Office européen des brevets

(19)

(11) Publication number: **0 015 883**
A1

# (12) EUROPEAN PATENT APPLICATION

(21) Application number: 80830011.5

(22) Date of filing: 03.03.80

(51) Int. Cl.³: **F 16 B 12/20**

(30) Priority: 08.03.79 IT 1249479
08.02.80 IT 333080

(43) Date of publication of application: 17.09.80
Bulletin 80/19

(84) Designated Contracting States: **AT BE CH DE FR GB LU
NL SE**

(71) Applicant: **OFFICINE MECCANICHE BASSAN & C.S.r.l.,
Viale Porta Adige n. 91/e, I-45100 Rovigo (IT)**

(72) Inventor: **Bassan, Eraclio, Via Resistenza n. 11,
I-45100 Rovigo (IT)**

(74) Representative: **Pederzini, Paolo, BUGNION S.p.A. Via
Farini n. 37, I-40124 Bologna (IT)**

(54) **Device with a self-locking effect for uniting two panels.**

(57) The invention relates to a device that comprises: a cylindrical peg (7) provided with a succession of circumferential grooves (107) that define a sort of rack (207); an accepting element (9) provided internally with a hole (109) inside which the said cylindrical peg (7) can pass, and at least one receding part and cylindrical groove (209—309) that communicates with the outside and with the said hole (109) inside which is housed a pin (12) that has a cylindrical head (112) toothed circumferentially, the shank of this being provided with a sprocket (212) destined to mesh with the said rack (207); and a pawl (14) or (16) which can be made to mesh with the toothing of the said cylindrical head (112) so as to allow the pin (12) to only rotate in the same direction as that in which the peg (7) is inserted into the body of the accepting element, laterally to which operates an elastic member (15), (25) or (20), which tends to keep it engaged with the said toothing of the cylindrical head (112).

peg is made to penetrate still more thoroughly into the accepting element, in an endeavour to achieve a tight grip on the panels to be united.

The actual distance the peg is moved on the part of the bush is very limited; in practice a rotation of over 180° of the bush only results in a movement of a few millimetres and thus various problems can occur.

If, in fact, the accepting element should happen, on account of an accidental lack of assembly precision, to be too close to the edge of the panel which is carried flush up against the other panel, when the bush arrives at the end of its rotation it does not succeed in dragging the peg a sufficient distance to achieve the desired interlocking of the panels.

When, instead, the accepting element is too far away from the said edge, the bush fails to arrive at its travel limit and the tightening of the panels is unstable. In this case, should the panels be subjected to lateral thrust or tend to move away one from the other, as can happen during transportation, the bush may be subjected to rotation in the opposite direction to that in which the peg is made to move in the inside of the accepting element, and this causes the panels to work loose from one another.

In other known devices, it is envisaged that the said bush be mounted coaxially on the accepting element, perpendicularly to the axis of the housing or hole in which the peg is inserted, and that the front part thereof be provided with a spiral track inside which the head of the peg only partially engages. At the time the panels are being assembled, the said bush has to be positioned in such a way that the head of the peg engages, when being inserted into the body of the accepting element, with the most external part of the said track.

Once the head of the peg has been initially engaged with the said track, the peg is made, by suitably rotating the bush, to gradually penetrate into the inside of the body of the accepting element, in order to tighten one panel against the other.

Here again the actual movement is very limited, and whilst there is no risk of the panels being tightened unstably one to the other, as in the previous instance, there is the risk that because of play between the parts when endeavouring to force the tightening to a maximum, the head of the peg may come out o f the spiral track, with the need to repeat the operation and the risk of the grip between the panels suddenly working loose.

The object of the invention is to solve the aforementioned difficulties and, in particular, to make available a device of the stated type, by means of which the parts can be stably intercoupled right from the time when the two panels to be united are placed one at the side of the other.

Based on principles that differ completely from those outlined above for coupling a peg to an accepting element, and in conformity with Italian Patent Applications 12494A/79 and 3330A/80, priority for which is claimed, essential features of the device in question are that the said peg is provided with a succession of circumferential grooves that define a sort of rack, and that the said accepting element has, perpendicularly to the said seating or hole through which the peg passes, at least one housing and one receding part that communicates with the outside and with the seating or hole, inside which is housed a pin with a cylindrical head that is toothed circumferentially with small, close set, teeth, the shank of the said pin being provided with a sprocket destined to mesh with the said rack at the time the peg is being inserted into the accepting element, the said device comprising, furthermore, a pawl that meshes

- 4 -

0015883

with the toothing of the said cylindrical head and is placed laterally to the pin with the possibility of effecting displacement movements with respect thereto in order to allow the pin to only rotate in the same direction in which the peg is inserted in the body of the accepting element, an elastic member which tends to keep the peg engaged with the toothing of the cylindrical head of the pin, being provided.

With a device of this type, irrespective of the position of progressive insertion of the peg into the body of the accepting element, when the pawl is in a position of engagement with the toothing of the head of the pin, the two parts cannot come accidentally apart, and a sizable working stroke is available for tightening one panel to the other with the possibility of easily taking up even play of some entity between the parts.

Then taking into consideration that the pressure applied manually to tighten thoroughly the panels one to the other, by pressing one against the other, can never ever be as great as the desired maximum, with the device in question the possibility exists of the two parts being ultimately tightened forcibly by the operator with the aid of a screwdriver or spanner used on the head of the pin provided with the sprocket that meshes with the rack, so as to rotate the pin in the direction allowed by the pawl.

The characteristics of the invention will now be described better in the description that follows of various preferred forms of embodiment, with reference to the accompanying drawings, in which:

- Fig. 1 shows the device in a first version, seen from the front, with the units that go to make it up, in an expl oded view;
- Fig. 2 represents the section along the line II-II of the accepting element;

- Figs. 3 and 4 show the accepting element of the device as illustrated in Figs. 1 and 2, with the contrivances connected thereto depicted in the way in which they are to be found at the time the panels to be united are locked one to the other, and are parted one from the other, respectively;

- Fig. 5 shows a second version for the device, with the parts seen from the front;

- Fig. 6 shows the accepting element of the device as illustrated in Fig. 5 but in sectional form along the line VI-VI thereof;

- Fig. 7 shows a third version for the device, seen from the front, with the peg and the accepting element unattached from one another, with some parts in sectional form in order that others may be more visible, and with the pawl in the non-operative position;

- Fig. 8 shows, from the front, the accepting element of the device as illustrated in Fig. 7, with the pawl placed in the position of engagement with the toothing of the head of the pin belonging to the accepting element, in such a way as to allow the rotation thereof in the same direction as that in which the peg is inserted into the body of the accepting element;

- Fig. 9 shows in part the accepting element of the device illustrated in Figs. 7 and 8, the pawl being depicted with a continuous line in the non-operative position and with a dotted line for the position as in Fig. 8.

The three versions illustrated are all based on one and the same basic characteristic method which is achieved with mechanical contrivances that differ one from the other but are all equivalent.

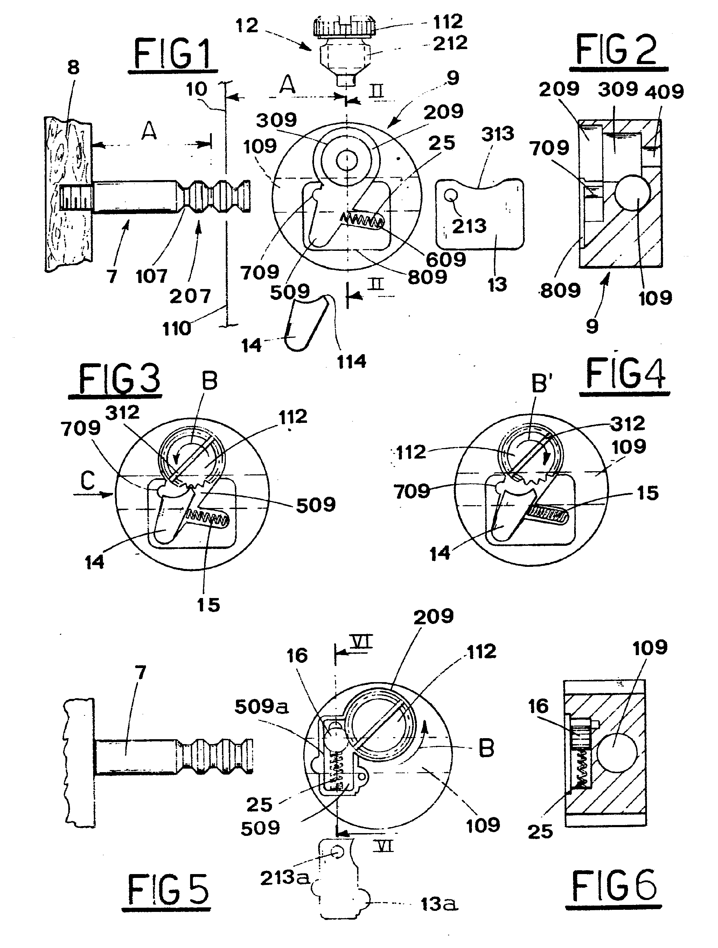

With reference to Figs. 1 and 2, and in conformity with Italian Patent Application 12494A/79, the device in question is provided with a peg (7) that has to be rendered integral (by screwing it), cantilever fashion, with a panel (8), and an accepting element (9), flush mounted on the other panel (10), inside which the peg (7) can be inserted.

The said peg (7) - preferably made of metal - is cylindrical and has on the opposite extremity to that used to secure it to the panel (8), a succession of grooves (107), the central one of which protrudes from the panel for a distance (theoretical) A. The grooves (107) form a sort of rack (207), more about which will be said in due course.

The body (9) - preferably made of metal - is a low cylinder stably flush mounted in the panel (10), with care being taken to ensure that the axis thereof parallel to the edge (110) of the panel is at the same distance A (theoretical), stated previously, away from the said edge.

The accepting element (9) is provided with a hole (109) inside which the peg (7) can pass.

On a plane parallel to the axis of the said hole there is, in the front face of the body of the accepting element (9), a receding part (209) which, at a certain level, decreases in diameter and provides a cylindrical groove (309). The base of this has in it a hole (409) of a lesser diameter.

The said cylindrical groove (309) communicates tangentially with the hole (109).

At (12) there is a special pin, the head (112) of which is cylindrical, and the perimeter of this is provided with small, close set, teeth, whilst the shank has toothing that forms a sprocket (212) with few teeth (see for their profile the front view with a dotted line inside the groove (309) in Fig. 1), shaped to suit the grooves (107) of the peg (7). The said pin (12) is dimensioned in a way whereby the shank is housed in the cylindrical groove (309) and in the hole (409) of the body of the accepting element (9), whilst the head (112) fits into the receding part (209).

When the peg (7) penetrates into the hole (109), the rack (207) meshes with the sprocket (212) and thus the pin (12) rotates in one direction or the other, depending upon the movement of the peg (7) with respect to the hole (109).

On account of assembly reasons for certain of the parts, the accepting element (9) has on the front face thereof a small rectangular housing (809) to allow a covering plate (13) to be mounted in a removable fashion. The said housing communicates with the receding part (209) and thus when the pin (12) is mounted, the plate (13) is placed partially over, through the edge (313) thereof, a section of the head (112) of the pin, thereby preventing the latter from coming out of the seating in which it is housed.

Comprised in the receding part (209) there is a roughly trapezoidal section (509) which is linked to the former at the same level of depth and extends at a lower level with respect to the housing (809), in the region thereof. On the wall of the said section (509) of the receding part (209), which when the accepting element is mounted on the panel (10) is positioned towards the edge (110), there is a cylindrical slot (709) of a semi-circular section, that runs vertically. Provision is made on the opposite wall for a notch (609), approximately orthogonal thereto, inside which a spring (15) is housed. Housed freely in the trapezoidal section (509) of the receding part (209) there is a pawl (14) of an analogous profile, though narrower in width, which on the side that is turned towards the head (112) of the pin (12), is in the form of a small hook (114).

The length of the pawl (14) is such that once it is in the position of engagement with the toothing of the head (112), it stays displaced angularly with respect to the imaginary line that theoretically connects the axis of rotation of the pin (12) with the axis around which the said pawl (14) is able to rotate. The effect of this is that when the pin (12) is rotating anticlockwise, the pawl (14), as it gradually climbs over the toothing with which the said head (112) is provided, does not oppose the said rotation. If, instead, the pin (12) should tend to rotate clockwise, the pawl (14) engages fixedly with the said toothing and halts the pin (12).

With the covering plate mounted, the semi-circular slot (709) is coaxial with a circular hole (213) that runs through the said plate (13).

Now with reference to Figs. 3 and 4, the operation of the device forming the subject of the invention will be described, and it is pointed out thst under normal conditions the spring (15) keeps the pawl (14) pushed towards that side of the section (509) where there is the semi-circular slot (709), whilst the hook (114) of the pawl (14) engages with the toothing of the head (112) of the pin (12).

When the panels (8) and (10) are coupled manually, placed orthogonally one at the side of the other, the peg (7), as it moves forward in the hole (109) in the direction shown with the arrow C in Fig. 3, at the time the rack (207) thereof engages with the sprocket (212), causes the pin (12) to rotate in the direction indicated by the arrow B.

Because of the arrangement of the pawl (14) with respect to the head (112) of the pin (12) and of the thrust exerted by the spring (15) on the said pawl, the pin (12) is no longer able to rotate in the reverse direction.

Thus the panels (8) and (10) are connected one to the other right from the time they are placed side by side, in a way that is already quite tight. With the panels (8) and (10) side by side, the pin (12) can, if necessary, be made to

rotate further by means of a screwdriver that can be inserted in the nick (312) provided in the head (112) thereof, in such a way as to bring about an additional brief penetration of the peg (7) into the hole (109) so as to force the panels (8) and (10) to tighten still further.  All that has to be done to separate the panels (8) and (10) is to insert a small punch in the slot (709), through the hole (213) with which the plate (13) is provided, in such a way as to move the pawl hook (114) away from the toothing of the head (112) of the pin (12).  In this way, the pin (12) is able to rotate freely in both directions indicated by the arrows B and B', and the panels (8) and (10) can be inter spaced by eventually withdrawing the peg (7) from the hole (109).

According to another form of embodiment illustrated in Figs. 5 and 6, the pawl is formed by a cylinder (16) movable inside the section (509), of a suitable shape and provided with circumferential teeth for it to mesh with the head (112) of the pin (12).  Under normal working conditions, the cylinder (16) is kept wedged in between the wall (509a) of the section (509) and the head (112) of the pin (12) under the thrust of a spring (25) whose function is identical to that of the spring (15).

When the above condition prevails, likewise to what was seen above, the pin (12) can only rotate in the direction indicated by the arrow B, that is to say, in the same direction as that in which the peg (7) is inserted into the hole (109).  Rotation in the opposite direction would be prevented by the cylinder (16) being forcibly wedged in between the wall (509a) and the head (112) of the pin (12).  Again in this case by using a punch inserted in the hole (213a) provided in a covering plate (13a) for the section (509), the cylinder (16) can be made to move away from the head (112) and the pin (12) be allowed to rotate freely in both directions.

In accordance with what is illustrated in Figs. 7 and 8, and in keeping with Italian Patent Application 3330A/80, the pawl (14) is pivoted at (214) to the body of the accepting element (9) with the possibility to effect a small angular two-way deviation from a position in which it is, at the free extremity thereof, away from the toothing of the said head (112), to a position in which it is in engagement therewith and vice versa. On one side the pawl (14) has in it an indentation (314) (see best Fig. 4) which, together with the lower profile of the same side forms a sort of cam (414) with which engages a flexible pin (20) either integral with the body of the accepting element (9) or else fixed thereto in any way and extending perpendicularly to the plane of the receding part (209). The position of the pin (20) from the axis of rotation of the pawl (14) is such that the distance (1) of the vertex (514) of the cam away from the said axis is greater than the distance the pin (20) is away therefrom, when measured from a point on the lateral surface thereof located on the imaginary line that theoretically connects the axis of rotation of the pawl (14) with the axis of the said pin. The latter is also so positioned that when the pawl is in the position of engagement with the toothing of the head (112) of the pin (12), it is in forced contact with the lower profile of the said cam (414) (see Fig. 8), and that when the pawl (14) is positioned far away from the said toothing, it is partially housed in the indentation (314).

As regards the operation of the device according to the foregoing method, once the peg (7) and the accepting element (9) have been secured to the relevant panels (8) and (10), care has to be taken to carry, if it is not there already, the pawl (14) in the position of engagement with the toothing of the head (112) of the pin (12). This is possible by pressing laterally on to the pawl (14) with a screwdriver or similar, on the same side where the pin (20) is located, until the vertex (514) of the cam (414), by causing a slight

0015883

flexure of the pin (20), passes beyond the dead centre point that coincides with the imaginary line between the axis of rotation of the pawl (14) and the axis of the pin (20), and allows the former to click into the position illustrated in Fig. 8 and with a broken line in Fig. 9.

Just as in the preceding cases, with the panels (8) and (10) placed side by side, it is sufficient to insert the peg (7) into the hole (109) in the accepting element (9) and to force the panels (8) and (10) one against the other, in order to secure one to the other. To separate the panels (8) and (10), all that has to be done is to move the pawl laterally in the reverse direction to that described above, until the vertex (514) of the cam (414) passes past the said dead centre point and allows the pawl (14) to click into the backward position illustrated in Fig. 7.

With the pawl (14) in this position, the pin (12) is free to rotate in the two directions and, therefore, by applying a slight push to the panel (8), the peg (7) can easily be withdrawn from the accepting element (9).

- 1 -

Claims

1.  Device for uniting two panels of the type that comprises a cylindrical peg that can be fixed at one extremity to one of the panels, and an accepting element that can be fixed flush in the other panel, provided with a housing or hole through which the said peg can pass, and devices for restraining or hooking it, essential features of which are that according to Italian Patent Application 12494A/79 the said peg is provided with a succession of circumferential grooves (107) that define a sort of rack (207), and that the said accepting element (9) has perpendicularly to the said housing or hole (109) through which the peg (7) passes, at least one receding part and cylindrical groove (209-309) which communicate with the outside and with the housing or hole (109) inside which is housed a pin (12) with a cylindrical head (112) provided circumferentially with small, close set, teeth, the shank of which carries a sprocket (212) destined to mesh with the rack (207) when the peg (7) is inserted into the accepting element, the said device comprising, furthermore, a pawl (14) or (16) that meshes with the toothing of the said cylindrical head (112) and is placed laterally to the pin (12) with the possibility of effecting displacements with respect thereto in such a way as to allow the pin (12) to rotate only in the same direction as that in which the peg (7) is inserted into the body of the accepting element (9).

2.  Device according to Claim 1, essential features of which are that the pawl (14) or (16) is subjected to the action of a spring (15) or (25) which tends to keep it in engagement
with the toothing of the cylindrical head (112) of the pin
(12) and is housed in a prolongation (509) to the receding
part (209), the amplitude of which is greater than the flat
section of the pawl (14) or (16), the said receding part
having in one lateral wall a slot (709) that extends perpendicularly to the plane in which the pawl (14) or (16)
lies, is essentially semi-circular in section, and forms an
access compartment between the said wall and the said pawl
at the time the latter is in the position of engagement with
the toothing provided in the cylindrical head (112) of the
pin (12).

3. Device according to Claims 1 and 2, wherein the pawl
(16) is constituted by a cylinder whose axis is parallel
to that of the pin (12), provided circumferentially with
toothing that engages with that present in the cylindrical
head (112) of the pin (12), the said cylinder being pressed
by the spring (25) into a position in which it meshes with
the toothing of the cylindrical head (112) and rests up
against a wall (509a) in the section (509) diametrically
opposed to the point where the said cylinder meshes with
the said cylindrical head.

4. Device according to Claims 1, 2 and 3, wherein a plate
(13) or (13a) is provided to cover the section (509), which
can be inserted into an indentation made in the body of the
accepting element (9), in the region of the said section,
and extends circumferentially thereon, the said plate (13)
or (13a) being so dimensioned as to partially superpose the
cylindrical head (112) of the pin (12) and being provided
with an aperture or hole (213) which, once the plate has
been inserted into the aforementioned indentation, is coaxial with the slot (709) with which the section (509) is
provided.

5. Device according to Claim 1 and in conformity with Italian Patent Application 3330A/80, essential features of which are that the pawl (14) is pivoted to the body of the accepting element and has laterally at least one indentation (314) which defines the profile of a cam (414) with at least one vertex (514) arranged towards the outside, and that there is a pin (20) that gives slightly elastically, integral with the body of the said accepting element (9), extending perpendicularly to the plane in which the pawl (14) lies, the said pin (20) being placed laterally to the said pawl, in contact with the profile of the said cam (414) at the time the pawl is in the position of engagement with the toothing of the cylindrical head (112) of the said pin (12) and at a distance away from the axis of rotation of the pawl (14), measured from a point of the lateral surface thereof that is located on the imaginary line between the axis of rotation of the pawl (14) and that of the said pin (20), greater than the distance the vertex (514) of the said cam is away from the axis of rotation of the pawl (14), the said vertex (514) being located, along with the pawl (14), in the said position of engagement, downstream with respect to the said pin (20), between this and the free extremity of the pawl (14).

# FIG1

8
10
A
7   107
207
110

12   112
     212
II
9
309   209
109   25   313
      213
709   609
509   809   13
14
114
II

# FIG2

209   309   409
709
809   9   109

# FIG3

312   B
709   112
C
509
14
15

# FIG4

B'
112   312
      109
709
      15
14

7

209
16   112
509a
25
509   B
213a   109
VI
13a

# FIG5

109
16
25

# FIG6

European Patent Office

**EUROPEAN SEARCH REPORT**

0015883
Application number

EP 80 83 0011

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 292 885 (LEHMANN)<br>* Page 4, line 18 - page 6, line 38; figures 1,2,15 *<br>-- | 1 | F 16 B 12/20 |
| | FR - A - 2 333 991 (AUBIER CUNY)<br>* Claims 1-3; figures 1-3 *<br>-- | 1 | |
| | FR - A - 2 106 883 (BLANC)<br>* Claims 1-5; figures 2-4 *<br>-- | 1 | **TECHNICAL FIELDS SEARCHED (Int.Cl. 3)** |
| | FR - A - 2 278 977 (SCREWS & FASTE-NERS)<br>* Claim 1; figures 1,2 *<br>-- | 1 | F 16 B |
| | FR - A - 1 458 679 (ROZENTRAUB)<br>* Page 3, column 1, paragraph 2; figures 2,4 *<br>-- | 1,4 | |
| | FR - A - 2 352 978 (GRASS)<br>* Claims 29-30; figures 52,53 *<br>---- | 1 | **CATEGORY OF CITED DOCUMENTS**<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | The present search report has been drawn up for all claims | | &: member of the same patent family, corresponding document |
| Place of search<br>The Hague | Date of completion of the search<br>19-06-1980 | Examiner<br>SCHMITTER | |

EPO Form 1503.1 06.78